# EUROPEAN PATENT APPLICATION

(11) **EP 4 657 062 A2**
(43) Date of publication of application: **03.12.2025**
(21) Application number: 25180266.6
(22) Date of filing: 02.06.2025
(51) Int. Cl.: G01N 29/12, G01N 29/22, G01N 29/265

(54) **ACTUATABLE GUIDE TUBE FOR ELECTRONIC INSPECTION SCOPE**

(30) Priority: 31.05.2024 US 202418680640
(71) Applicant: RTX Corporation, Farmington, CT 06032 (US)
(72) Inventor: KING, Christopher, Terryville, 06786 (US); MATTHEWS, John, Amston, 06231 (US)
(74) Representative: Dehns

(57) **Abstract**

An inspection method is provided during which a distal end (62) of a guide tube (56) is inserted into an interior (26) of a powerplant (24). The powerplant (24) includes a component (22) within the interior (26) of the powerplant (24). A flexible section (70) of the guide tube (56) is bent within the interior (26) of the powerplant (24). An inspection scope (28) is passed longitudinally through a bore of the guide tube (56), and a head (40) of the inspection scope (28) is abutted against a surface (54) of the component (22). The head (40) of the inspection scope (28) includes an actuator (42). The distal end (62) of the guide tube (56) is spaced from the surface (54) of the component (22). Vibrations are induced in the component (22) using the actuator (42). A vibratory response is measured in the component (22) excited by the vibrations using a sensor (44) to provide sensor data.

## Description

### BACKGROUND OF THE DISCLOSURE

### 1. Technical Field

This disclosure relates generally to inspection and, more particularly, to non-destructive inspection for internal defects.

### 2. Background Information

Various systems and methods are known in the art for inspecting a component for internal defects. While these known inspection systems and methods have various benefits, there is still room in the art for improvement.

### SUMMARY OF THE DISCLOSURE

According to an aspect of the present disclosure, an inspection method is provided during which a distal end of a guide tube is inserted into an interior of a powerplant. The powerplant includes a component within the interior of the powerplant. A flexible section of the guide tube is bent within the interior of the powerplant. An inspection scope is passed longitudinally through a bore of the guide tube, and a head of the inspection scope is abutted against a surface of the component. The head of the inspection scope includes an actuator. The distal end of the guide tube is spaced from the surface of the component. Vibrations are induced in the component using the actuator. A vibratory response is measured in the component excited by the vibrations using a sensor to provide sensor data.

According to another aspect of the present disclosure, another inspection method is provided during which a guide tube and an inspection scope are provided. The guide tube extends longitudinally along a centerline to a distal end of the guide tube. The guide tube includes a first rigid section, a second rigid section and a flexible section extending longitudinally along the centerline from the first rigid section to the second rigid section. The inspection scope includes a scope head and a scope body extending longitudinally to the scope head. The scope head includes an electromechanical device. The flexible section is deformed to angularly offset the first rigid section from the second rigid section by an offset angle less than one-hundred and eighty degrees. The inspection scope is passed longitudinally through a bore of the guide tube with the scope head arranged at or near the distal end of the guide tube.

According to still another aspect of the present disclosure, a system is provided for use in inspecting a powerplant component. The system includes a guide tube and a guide tube controller. The guide tube extends longitudinally along a centerline to a distal end of the guide tube. The guide tube includes a first rigid section, a second rigid section and a flexible section extending longitudinally along the centerline between the first rigid section and the second rigid section. The flexible section includes a plurality of relief cuts in a sidewall of the guide tube arranged longitudinally along the centerline. The guide tube controller is operatively coupled to the guide tube. The guide tube controller is configured to bend the guide tube at the flexible section and angularly offset the first rigid section from the second rigid section by an offset angle less than one-hundred and eighty degrees.

The flexible section of the guide tube may be bent within the interior of the powerplant such that the distal end of the guide tube faces an inspection location on the surface of the component. The head of the inspection scope may be abutted against the surface of the component at the inspection location.

The guide tube may extend longitudinally along a centerline to the distal end of the guide tube. The guide tube may include a first rigid section, a second rigid section and the flexible section of the guide tube. The flexible section of the guide tube may be connected longitudinally along the centerline between the first rigid section and the second rigid section. The centerline along the first rigid section may be angularly offset from the centerline along the second rigid section by an offset angle following the bending.

The centerline along the first rigid section may be parallel with the centerline along the second rigid section during the inserting.

The offset angle may be an obtuse angle that is less than one-hundred and eighty degrees.

The offset angle may be a right angle.

The offset angle may be an acute angle.

A monolithic body may include the first rigid section, the second rigid section and the flexible section of the guide tube.

A first guide may be connected to the first rigid section. A first control cable may extend through the first guide and may be connected to the second rigid section. The bending may include pulling the first control cable to decrease a length of a section of the first control cable that extends between the first rigid section and the second rigid section.

The inspection method may also include unbending the flexible section of the guide tube within the interior of the powerplant following the measuring. A second guide may be connected to the first rigid section. A second control cable may extend through the second guide, and may be connected to the second rigid section. The first control cable and the second control cable may be arranged to opposing sides of the guide tube. The unbending may include pulling the second control cable to decrease a length of a section of the second control cable that extends between the first rigid section and the second rigid section.

The guide tube may extend longitudinally along a centerline to the distal end of the guide tube. The centerline along the flexible section of the guide tube may be straight during the inserting.

The guide tube may be or otherwise include a length of tubing. The flexible section of the guide tube may be a section of the length of tubing with one or more relief cuts.

The inspection method may also include: removing the inspection scope from the guide tube following the measuring; and straightening the flexible section of the guide tube within the interior of the powerplant following the removing.

The inspection method may also include preloading the head of the inspection scope against the surface of the component.

The head of the inspection scope may also include the sensor.

The actuator may be configured as or otherwise include a piezoelectric device.

The sensor may be configured as or otherwise include a piezoelectric device.

The inspection method may also include determining a characteristic of the component using the sensor data.

The inspection method may also include detecting a defect internal to the component using the sensor data.

The powerplant may be configured as or otherwise include a turbine engine. The component may be configured as a rotor disk.

The powerplant may be installed with an aircraft during the inserting, the bending, the passing, the inducing and the measuring.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for inspecting a component of a powerplant.
FIG. 2 is a partial illustration of a guide tube system with a guide tube controller and a guide tube in a retracted arrangement.
FIG. 3 is a partial illustration of the guide tube system with the guide tube controller and the guide tube in a deployed arrangement.
FIGS. 4 and 5 are partial illustrations of the guide tube in various other deployed arrangements, where the guide tube is shown without the guide tube controller for ease of illustration.
FIG. 6 is a partial illustration of another guide tube in a retracted arrangement (solid line) and a deployed arrangement (dashed line), where the guide tube is shown without the guide tube controller for ease of illustration.
FIG. 7 is a flow diagram of a method for inspecting a component of a powerplant.
FIGS. 8A and 8B are graphs of various measured resonant signatures compared to a model resonant signature.

### DETAILED DESCRIPTION

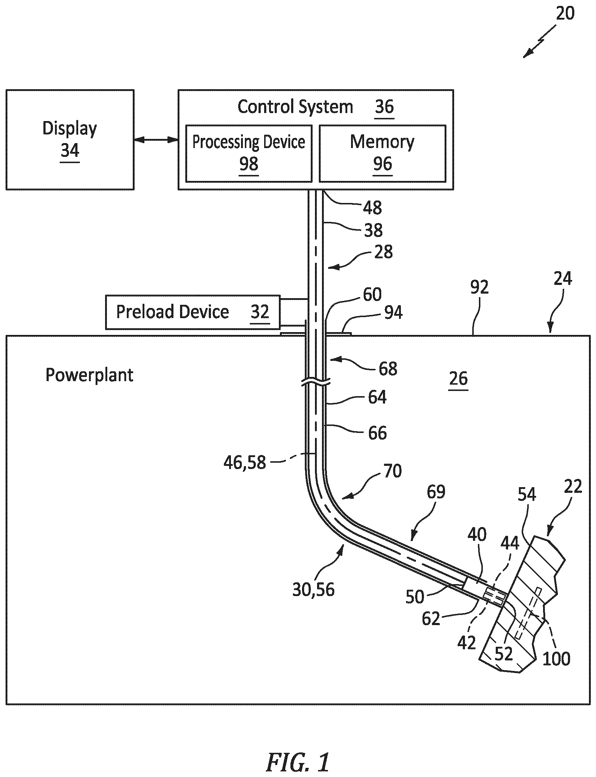

FIG. 1 illustrates a system 20 for non-destructive inspecting a component 22 of a powerplant 24 for an aircraft. The aircraft may be an airplane, a helicopter, a drone (e.g., an unmanned aerial vehicle (UAV)) or any other manned or unmanned aerial vehicle or system. The aircraft powerplant 24 may be configured as, or otherwise included as part of, a propulsion system for the aircraft. The aircraft powerplant 24, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. The aircraft powerplant 24 may alternatively be configured as, or otherwise included as part of, a power generation system for the aircraft. The aircraft powerplant 24, for example, may be an auxiliary power unit (APU) or any other type of gas turbine engine configured to mechanically power operation of an electrical generator. The present disclosure, however, is not limited to such exemplary aircraft powerplants. The inspection systems and methods of the present disclosure, for example, may also be used for inspecting components of other types of internal combustion engines and/or components of various other types of power units; e.g., an electric machine, a hybrid-electric power unit, etc.

The inspection system 20 is configured to facilitate inspection of the powerplant component 22 while that powerplant component 22 remains installed with the aircraft powerplant 24 and, for example, while the aircraft powerplant 24 remains substantially or completely assembled. The powerplant component 22 of FIG. 1, for example, is disposed within an interior 26 (e.g., an enclosed volume, an encased volume, etc.) of the aircraft powerplant 24. The inspection system 20 is also configured to facilitate inspection of the powerplant component 22 while the aircraft powerplant 24 remains onboard the aircraft; e.g., remains installed on wing, on fuselage, in airframe, etc. The inspection of the powerplant component 22 may also be performed using the inspection system 20 while outside of an aircraft hangar and/or a dedicated inspection and/or repair facility; e.g., on a tarmac at an airport between aircraft flights. The inspection of the powerplant component 22 may thereby be performed with a relatively short aircraft downtime and/or a relatively minimal expense. The inspection system 20, of course, may also be used for inspecting the powerplant component 22 installed with the aircraft powerplant 24 when that aircraft powerplant 24 is not installed with the aircraft (e.g., prior to installation with the aircraft or following removal from the aircraft) and/or when the aircraft powerplant 24 is partially disassembled into one or more sub-assemblies.

The powerplant component 22 may be any inspectable (e.g., metal) component within the aircraft powerplant 24. However, for ease of description, the powerplant component 22 may be described below as a rotor disk of a bladed rotor within a gas turbine engine, and the aircraft powerplant 24 may be described below as the gas turbine engine. The rotor disk may be a turbine disk such as a rotor disk in a high pressure turbine (HPT) section or a low pressure turbine (LPT) section of the gas turbine engine. Alternatively, the rotor disk may be a compressor disk such as a rotor disk in a low pressure compressor (LPC) section or a high pressure compressor (HPC) section of the gas turbine engine. The present disclosure, however, is not limited to such exemplary powerplant component configurations. The powerplant component 22, for example, may alternatively be configured as a hub, a shaft or any rotating component within the aircraft powerplant 24.

The inspection system 20 may be configured as an inspection scope inspection system. The inspection system 20 of FIG. 1, for example, includes an electronic inspection scope 28, a guide tube system 30 and a preload device 32. This inspection system 20 also includes a display 34 and a processing system 36. Examples of the display 34 include, but are not limited to, a screen, a monitor and/or a touch screen.

The inspection scope 28 may be configured as or otherwise include a borescope or another flexible or rigid elongated probe. The inspection scope 28 of FIG. 1, for example, includes a scope body 38 (e.g., a flexible tether), a scope head 40, a vibration actuator 42 and a vibration sensor 44.

The scope body 38 extends longitudinally along a longitudinal centerline 46 of the inspection scope 28 and its members 38 and 40 from a base end 48 of the inspection scope 28 to a longitudinal proximal end 50 of the scope head 40. The scope body 38 is a flexible body.

The scope head 40 is disposed at a longitudinal distal end 52 of the inspection scope 28. The scope head 40 of FIG. 1, for example, extends longitudinally along the scope centerline 46 from the head proximal end 50 to the scope distal end 52 of the inspection scope 28; here, also a longitudinal distal end of the scope head 40. The vibration actuator 42 and the vibration sensor 44 are each arranged with (e.g., mounted to and/or disposed in) the scope head 40. The vibration actuator 42 and the vibration sensor 44 of FIG. 1 are also each disposed at (e.g., on, adjacent or proximate) the scope distal end 52. At this scope distal end 52, the scope head 40 is configured to longitudinally contact, abut against or otherwise engage an exterior surface 54 of the powerplant component 22 at an inspection location for the inspection of the powerplant component 22. Here, one or more of the scope members 42 and/or 44 may also directly or indirectly engage the component surface 54 at the scope distal end 52.

The vibration actuator 42 is configured to induce vibrations in the powerplant component 22 based on a control signal received from the processing system 36. The vibration sensor 44 is configured to measure a vibratory response in the powerplant component 22 excited by the vibrations induced by the vibration actuator 42. The vibration sensor 44 is further configured to provide sensor data (e.g., an output signal or signals) to the processing system 36 indicative of the measured vibratory response.

The vibration actuator 42 and the vibration sensor 44 may be configured as or otherwise include one or more piezoelectric devices. The vibration actuator 42, for example, may be configured as or otherwise include a piezoelectric actuator. The vibration sensor 44 may be configured as or otherwise include a piezoelectric sensor. The vibration actuator 42 and the vibration sensor 44 and their piezoelectric devices may thereby be respectively configured as discrete units. The vibration actuator 42 and the vibration sensor 44, however, may alternatively be configured together into a single piezoelectric device - a piezoelectric transducer which both induces the vibrations and measures the vibratory response. Examples of the piezoelectric device(s) include, but are not limited to, a piezoelectric stack and a single crystal piezoelectric device. The piezoelectric stack may include a longitudinal stack (or multiple layers) of piezoelectric actuators. The single crystal piezoelectric device may include a piezoelectric ceramic element with a single crystal orientation and no grain boundaries. In general, the single crystal piezoelectric device may provide higher power and greater sensitivity than a comparable piezoelectric stack. The present disclosure, however, is not limited to the foregoing exemplary piezoelectric device configurations. Moreover, it is contemplated the vibration actuator 42 may be configured as another type of electromechanical device operable to induce vibrations, and/or the vibration sensor 44 may be configured as another type of electromechanical device operable to measure the vibratory response.

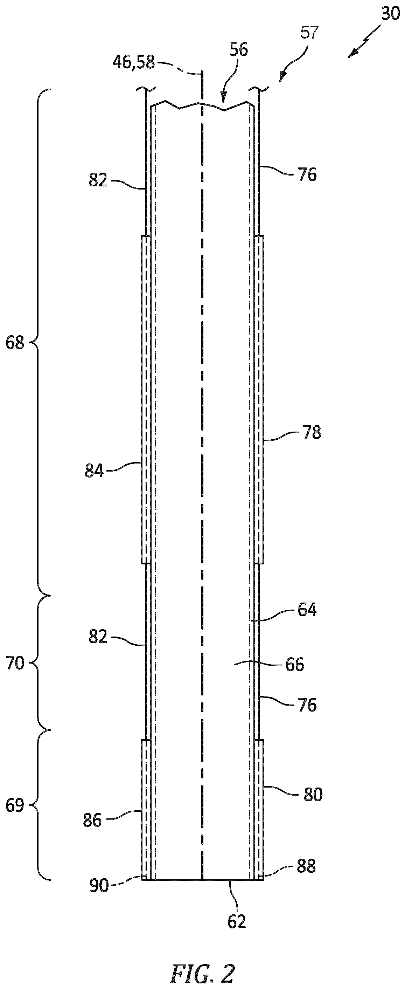

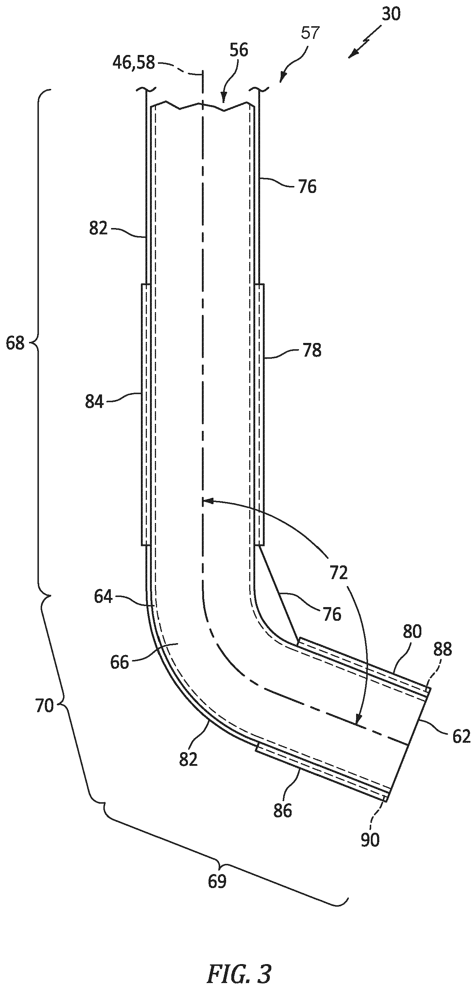

Referring to FIGS. 2 and 3, the guide tube system 30 includes an actuatable guide tube 56 and a guide tube controller 57. Referring to FIG. 1, the guide tube 56 may be configured as or otherwise include a length of tubing. The guide tube 56 extends longitudinally along a centerline 58 of the guide tube 56 from a base end 60 of the guide tube 56 to a distal end 62 of the guide tube 56. The tube centerline 58 of FIG. 1 is parallel with (e.g., coaxial with) the scope centerline 46. A sidewall 64 of the guide tube 56 forms an inner center bore 66 of the guide tube 56. The tube bore 66 extends longitudinally along the centerline 46, 58 through the guide tube 56 from the tube base end 60 to the tube distal end 62.

The guide tube 56 may be configured as a monolithic body. The guide tube 56 of FIG. 1, for example, includes a base section 68 of the length of tubing, a tip section 69 of the **length** of tubing and an intermediate flexible section 70 of the length of tubing. The base section 68 of FIG. 1 extends longitudinally along the centerline 46, 58 from the tube base end 60 towards (e.g., to) the flexible section 70. The tip section 69 of FIG. 1 extends longitudinally along the centerline 46, 58 from the tube distal end 62 towards (e.g., to) the flexible section 70. The flexible section 70 of FIG. 1 is arranged longitudinally between and is connected to (e.g., formed integral with) the base section 68 and/or the tip section 69. The flexible section 70 of FIG. 1, for example, extends longitudinally along the centerline 46, 58 from the base section 68 to the tip section 69.

The base section 68 and the tip section 69 are configured as relatively stiff, rigid sections of the guide tube 56 and its length of tubing. By contrast, the flexible section 70 is configured as a relatively flexible, bendable section of the guide tube 56 and its length of tubing. With this arrangement, the guide tube 56 is configured to deform at / along the flexible section 70 between a stowed, retracted arrangement (e.g., a straight arrangement FIG. 2) and a deployed arrangement (e.g., a bent arrangement FIG. 3). More particularly, the guide tube 56 is configured to bend from the stowed arrangement of FIG. 2 to the deployed arrangement of FIG. 3. The guide tube 56 is also configured to partially or completely straighten out (e.g., unbend) from the deployed arrangement of FIG. 3 to the retracted arrangement of FIG. 2. Of course, it is contemplated the guide tube 56 may also move (e.g., bend, straighten out) to one or more intermediate arrangements between the retracted arrangement and the deployed arrangement.

In the retracted arrangement of FIG. 2, the centerline 58 along the base section 68 may be parallel with, or within plus/minus five degrees (+/- 5°) of, the centerline 58 along the tip section 69 and/or the centerline 58 along the flexible section 70. The centerline 58 along one or more or all of the guide tube sections 68-70 may each have a straight-line trajectory. However, it is contemplated the centerline 58 along one or more or all of the guide tube sections 68-70 may alternatively be (e.g., slightly) bent in other embodiments.

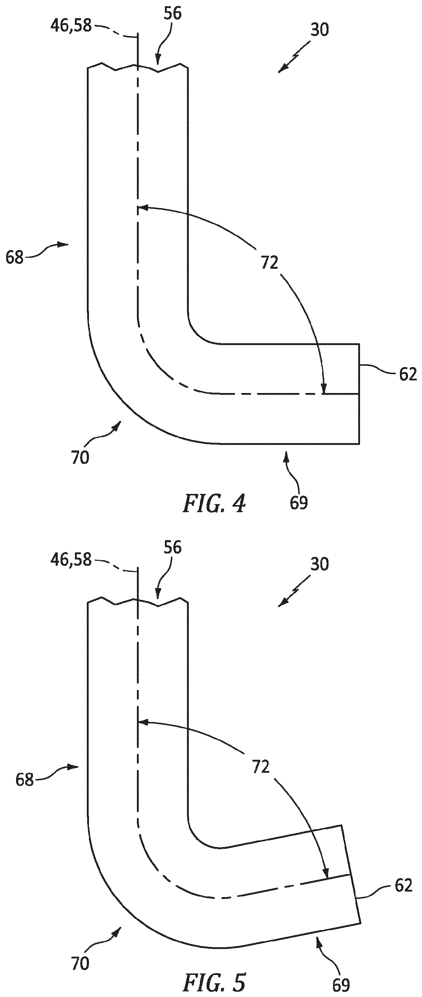

In the deployed arrangement of FIG. 3, the centerline 58 along the base section 68 is angularly offset from the centerline 58 along the tip section 69 by an offset angle 72. This offset angle 72 may be an obtuse angle less than one-hundred and eighty degrees (180°); e.g., about one-hundred and twenty degrees (120°), one-hundred and thirty-five degrees (135°) or one-hundred and fifty degrees (150°). Alternatively, referring to FIG. 4, the offset angle 72 may be a right angle (90°). Still alternatively, referring to FIG. 5, the offset angle 72 may be a non-zero acute angle. Here, the offset angle 72 may be particularly selected based on an orientation of the powerplant component 22 within the interior 26 of the aircraft powerplant 24. Referring to FIGS. 3-5, the centerline 58 along the base section 68 and/or the tip section 69 may each have a straight-line trajectory (e.g., maintain its straight-line trajectory). The centerline 58 along the flexible section 70 of FIGS. 3-5 has a curved (e.g., arcuate) and/or otherwise bend trajectory - a non-straight-line trajectory. However, it is contemplated the centerline 58 along the base section 68 and/or the tip section 69 may alternatively be (e.g., slightly) bent in other embodiments. That said, whereas the centerline trajectory along the flexible section 70 changes between the retracted arrangement and the deployed arrangement, the centerline trajectory along each guide tube section 68, 69 may remain the same between the retracted arrangement and the deployed arrangement.

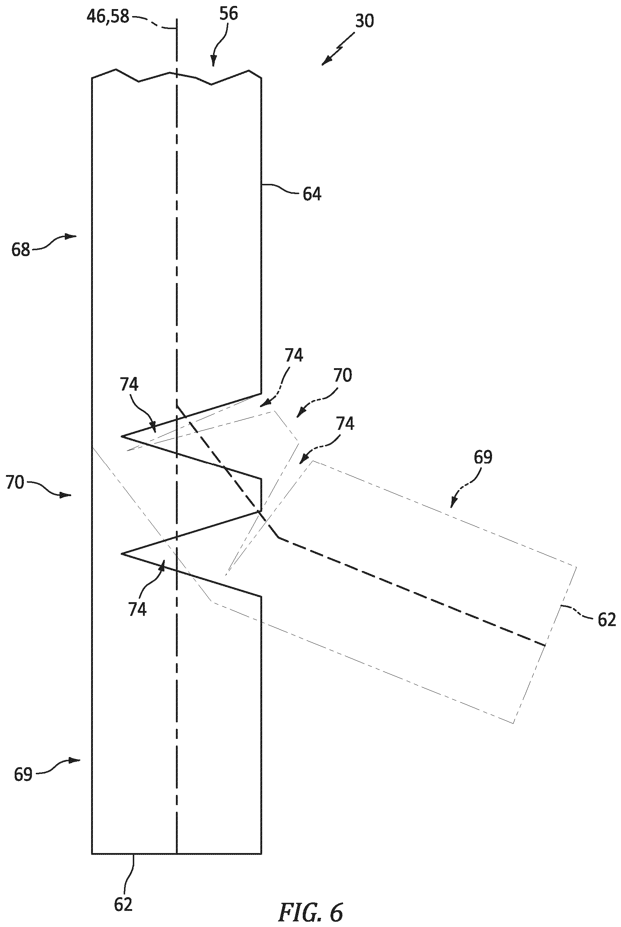

Referring to FIG. 6, the flexible section 70 is configured with one or more relief cuts 74. These relief cuts 74 are arranged and may be equispaced (e.g., when including more than two) longitudinally along the centerline 58 and the length of tubing in the flexible section 70. Each of the relief cuts 74 forms a notch in the guide tube 56 that extends partially laterally into the tube sidewall 64. When the guide tube 56 is in its retracted arrangement, each of the relief cuts 74 may have a wedge-shaped (e.g., triangular) geometry when viewed, for example, in a reference plane parallel with (e.g., including) the centerline 58. With this arrangement, portions of the tube sidewall 64 longitudinally along the relief cuts 74 may function as hinges facilitating partial or complete closing of the relief cuts 74 when the guide tube 56 is bent from the retracted arrangement to the deployed arrangement. The present disclosure, however, is not limited to such an exemplary flexible section configuration. For example, the flexible section 70 may alternatively be formed from a flexible material (e.g., rubber or another elastomer) which is attached to the other sections 68 and 69 formed from a different rigid material (e.g., metal).

Referring to FIGS. 2 and 3, the guide tube controller 57 is configured to actuate movement (e.g., bending, straightening out) of the guide tube 56 between the retracted arrangement and the deployed arrangement. The guide tube controller 57 of FIGS. 2 and 3, for example, includes a deployment control cable 76 (e.g., a spring steel wire) with one or more deployment cable guides 78 and 80. The guide tube controller 57 of FIGS. 2 and 3 also includes a retraction control cable 82 (e.g., a spring steel wire) with one or more retraction cable guides 84 and 86.

Each of the deployment cable guides 78 and 80 may be configured as a length of tubing. The base deployment cable guide 78 is bonded or otherwise attached to an exterior (or alternatively an interior) of the base section 68. This base deployment cable guide 78 extends longitudinally along the base section 68 to or near an interface between the base section 68 and the flexible section 70. The tip deployment cable guide 80 is bonded or otherwise attached to an exterior (or alternatively an interior) of the tip section 69. This tip deployment cable guide 80 extends longitudinally along the tip section 69 to or near an interface between the tip section 69 and the flexible section 70.

The deployment control cable 76 extends longitudinally through the base deployment cable guide 78, through an open gap between the deployment cable guides 78 and 80, and through the tip deployment cable guide 80. An end 88 of the deployment control cable 76 is connected to the tip section 69. The deployment control cable 76, for example, may be bonded to the tip deployment cable guide 80 or the tip section 69. In another example, the deployment control cable 76 may be knotted at its end 88 such that the deployment control cable 76 cannot be pulled out of the tip deployment cable guide 80 in a direction towards the base section 68. In still another example, a fitting (e.g., a boss, a sleeve, etc.) may be pressed (e.g., crimped, swaged, etc.) onto the deployment control cable 76 at its end 88 such that the deployment control cable 76 cannot be pulled out of the tip deployment cable guide 80 in a direction towards the base section 68. The present disclosure, however, is not limited to such exemplary cable connection techniques.

To bend the guide tube 56, the deployment control cable 76 may be pulled (e.g., from a location at or near the scope base end 48 and outside of the powerplant interior 26; see FIG. 1) to shorten an exposed / un-guided section of the deployment control cable 76 extending between the members 68 and 69, 78 and 80. This pulling of the deployment control cable 76 may thereby pivot the tip section 69 towards the base section 68 and bend the guide tube 56 along the flexible section 70. In some embodiments, the deployment control cable 76 may be manually pulled from outside of the aircraft powerplant 24 by a technician. In other embodiments, the deployment control cable 76 may be pulled from outside of the aircraft powerplant 24 by an actuator; e.g., an electric motor, etc.

Each of the retraction cable guides 84 and 86 may be configured as a length of tubing. The base retraction cable guide 84 is bonded or otherwise attached to the exterior (or alternatively the interior) of the base section 68. This base retraction cable guide 84 extends longitudinally along the base section 68 to or near the interface between the base section 68 and the flexible section 70. The tip retraction cable guide 86 is bonded or otherwise attached to the exterior (or alternatively the interior) of the tip section 69. This tip retraction cable guide 86 extends longitudinally along the tip section 69 to or near the interface between the tip section 69 and the flexible section 70. These retraction cable guides 84 and 86 of FIGS. 2 and 3 are arranged to a laterally opposing side of the guide tube 56 than the deployment cable guides 78 and 80.

The retraction control cable 82 extends longitudinally through the base retraction cable guide 84, through an open gap between the retraction cable guides 84 and 86, and through the tip retraction cable guide 86. An end 90 of the retraction control cable 82 is connected to the tip section 69. The retraction control cable 82, for example, may be bonded to the tip retraction cable guide 86 or the tip section 69. In another example, the retraction control cable 82 may be knotted at its end 90 such that the retraction control cable 82 cannot be pulled out of the tip retraction cable guide 86 in a direction towards the base section 68. In still another example, a fitting (e.g., a boss, a sleeve, etc.) may be pressed (e.g., crimped, swaged, etc.) onto the retraction control cable 82 at its end 90 such that the retraction control cable 82 cannot be pulled out of the tip retraction cable guide 86 in a direction towards the base section 68. The present disclosure, however, is not limited to such exemplary cable connection techniques.

To straighten out the guide tube 56, the retraction control cable 82 may be pulled (e.g., from a location at or near the scope base end 48 and outside of the powerplant interior 26; see FIG. 1) to shorten an exposed / un-guided section of the retraction control cable 82 extending between the members 68 and 69, 84 and 86. This pulling of the retraction control cable 82 may thereby pivot the tip section 69 away from the base section 68 and straighten out the guide tube 56 along the flexible section 70. In some embodiments, the retraction control cable 82 may be manually pulled from outside of the aircraft powerplant 24 by a technician. In other embodiments, the retraction control cable 82 may be pulled from outside of the aircraft powerplant 24 by an actuator; e.g., an electric motor, etc.

Referring to FIG. 1, the (e.g., deployed) guide tube 56 may be removably mounted to the aircraft powerplant 24 for the inspection of the powerplant component 22. The guide tube 56 and its base section 68, for example, may be rigidly attached to a stationary structure 92 (e.g., a casing, a wall, etc.) of the aircraft powerplant 24 through a guide tube mount 94. Briefly, this stationary structure 92 may house and/or form the interior 26 of the aircraft powerplant 24. The tube mount 94 may be bonded or otherwise fixed to the tube sidewall 64. The tube mount 94 of FIG. 1 projects laterally out (e.g., radially outward relative to the centerline 46, 58) from the tube sidewall 64 along a surface of the stationary structure 92. The tube mount 94 may be abutted against the stationary structure 92 and its surface. The tube mount 94 is mechanically fastened (e.g., bolted), clamped or otherwise attached to the stationary structure 92.

The (e.g., deployed) guide tube 56 is configured to facilitate locating the scope head 40 and its members 42 and 44 with the powerplant component 22. The guide tube 56 of FIG. 1, for example, is configured as a guide for inserting the inspection scope 28 into the interior 26 of the aircraft powerplant 24. The guide tube 56 of FIG. 1 is also configured as a support (e.g., a frame, a backbone, an exoskeleton, etc.) for a longitudinal length of the relatively flexible inspection scope 28 and its scope body 38 which extends longitudinally from (a) a location outside of the interior 26 of the aircraft powerplant 24 to (b) a location inside of the interior 26 of the aircraft powerplant 24 next to the powerplant component 22 and its component surface 54. The inspection scope 28 of FIG. 1, for example, extends longitudinally through the guide tube 56 and its tube bore 66 from the scope base end 48 to the scope distal end 52, where both ends 48 and 52 are disposed outside of the guide tube 56. The guide tube 56 and its tube sidewall 64 provide a stiff, rigid structure for the relatively flexible inspection scope 28 and its members 38 and 40 to engage; e.g., contact, slide against, rest against, etc. The scope head 40 may thereby slide along an interior surface of the tube sidewall 64 during assembly of the inspection scope 28 with the guide tube 56. Following this assembly, the guide tube 56 may maintain an extended linear (e.g., non-buckled, non-kinked, etc.) form of the inspection scope 28 for at least the length of the inspection scope 28 within the guide tube 56.

The tube distal end 62 of FIG. 1 is (e.g., slightly) longitudinally spaced from the powerplant component 22 and its component surface 54 along the centerline 46, 58 by a gap; e.g., an air gap. By contrast, the inspection scope 28 projects longitudinally out from the tube distal end 62 to its scope distal end 52; e.g., the distal end of the scope head 40. At the scope distal end 52, the inspection scope 28 and its scope head 40 longitudinally engage the powerplant component 22 and its component surface 54 as described above. The tube distal end 62 is thereby longitudinally recessed from the scope distal end 52 along the centerline 46, 58.

The preload device 32 is operatively coupled to (a) the guide tube 56 and its base section 68 and (b) the inspection scope 28 and its scope body 38. The preload device 32 is configured to preload the scope head 40 and one or more of its members 42 and/or 44 against the component surface 54 at the inspection location. The preload device 32, for example, may push the scope body 38 further into the guide tube 56 and apply a longitudinal force onto the scope body 38, for example once the scope body 38 can no longer move longitudinally further into the guide tube 56. The longitudinal force may transfer longitudinally through the scope body 38 and into the scope head 40, thereby pressing the scope head 40 against the component surface 54. The scope head 40 and one or more of its members 42 and/or 44 may thereby be preloaded against the component surface 54.

The processing system 36 is configured in signal communication (e.g., hardwired and/or wirelessly coupled) with the inspection scope 28 and its scope members 42 and 44 as well as the display 34. The processing system 36 of FIG. 1 may be in signal communication with the scope members 42 and 44 through one or more (e.g., electrically conductive and/or optical) signal paths extending within the scope body 38. The processing system 36 may be implemented with a combination of hardware and software. The hardware may include memory 96 and at least one processing device 98, which processing device 98 may include one or more single-core and/or multi-core processors. The hardware may also or alternatively include analog and/or digital circuitry other than that described above.

The memory 96 is configured to store software (e.g., program instructions) for execution by the processing device 98, which software execution may control and/or facilitate performance of one or more operations such as those described below. The memory 96 may be a non-transitory computer readable medium. For example, the memory 96 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

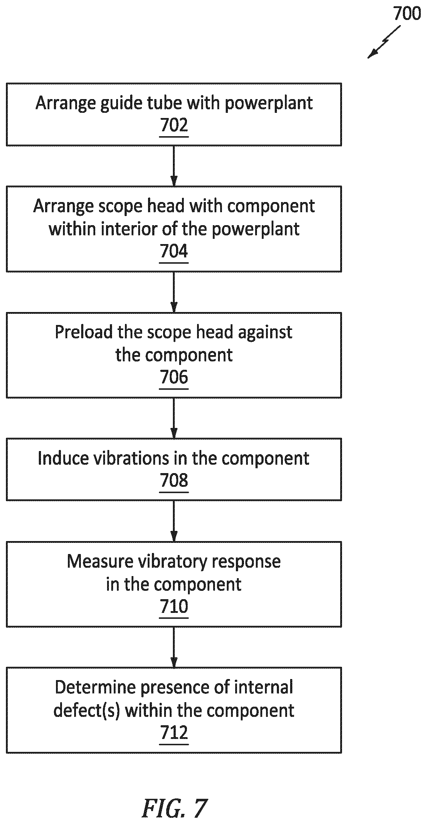

FIG. 7 is a flow diagram of a method 700 for inspecting the powerplant component 22 - a specimen component to be inspected. For ease of description, the inspection method 700 is described below with reference to the inspection system 20 of FIGS. 1-6. The powerplant component 22 is also described below as being installed with the aircraft powerplant 24 and disposed within the interior 26 of the aircraft powerplant 24, where the aircraft powerplant 24 remains installed onboard the aircraft. The inspection method 700 of the present disclosure, however, may alternatively be performed with other inspection systems and/or while the aircraft powerplant 24 is removed from the aircraft and/or when the aircraft powerplant 24 is partially disassembled into one or more sub-assemblies.

In step 702, the guide tube 56 is arranged with the aircraft powerplant 24. In particular, an inner portion of the guide tube 56 of FIG. 1 is inserted into the interior 26 of the aircraft powerplant 24. To facilitate this insertion, an access cover, a powerplant component and/or the like may be removed from the aircraft powerplant 24 or opened to provide an access port into the interior 26 of the aircraft powerplant 24. The inner portion of the guide tube 56 may then be passed through the access port into the interior 26 of the aircraft powerplant 24. During this insertion or following the insertion, the guide tube controller 56 is actuated (e.g., the deployment control cable 76 is pulled) to bend the guide tube 56 into, for example, its deployed arrangement. Once in position within the interior 26 of the aircraft powerplant 24, the guide tube 56 may be fixedly coupled to the stationary structure 92 using the tube mount 94. The guide tube 56 may thereby be anchored to the stationary structure 92 and fixed within the interior 26 of the aircraft powerplant 24. In this fixed position, the tube distal end 62 is (e.g., slightly) longitudinally spaced from the powerplant component 22 and its component surface 54 by a gap as described above. Note, while the guide tube 56 is described as being fixedly coupled to the stationary structure 92 following the bending of the guide tube 56, it is contemplated the guide tube 56 may alternatively be bent into the deployed arrangement following the fixing of the guide tube 56 to the stationary structure 92.

In step 704, the scope head 40 is arranged with the powerplant component 22. The scope head 40, for example, is inserted into the interior 26 of the aircraft powerplant 24. More particularly, the scope head 40 is inserted into the tube bore 66. The inspection scope 28 and its scope head 40 are then passed longitudinally through the guide tube 56 and its tube bore 66 until the scope head 40 and its distal end abut against the powerplant component 22 and its component surface 54 at the inspection location.

**In** step 706, the scope head 40 is preloaded against the powerplant component 22 and its component surface 54 at the inspection location. The preload device 32, for example, may push the scope body 38 further into the guide tube 56 and apply a longitudinal force onto the scope body 38, for example once the scope body 38 can no longer move longitudinally further into the guide tube 56. The longitudinal force may transfer longitudinally through the scope body 38 and into the scope head 40, thereby pressing the scope head 40 against the component surface 54. The scope head 40 and one or more of its members 42 and/or 44 may thereby be preloaded against the component surface 54. This preload may be equal to or greater than one or two pounds (1-2 lbs); e.g., between one and one-half pounds (1.5 lbs) and four and one-half pounds (4.5 lbs). The present disclosure, however, is not limited to such an exemplary preload and may change based on actuator and/or sensor specifications.

In step 708, vibrations are induced in the powerplant component 22 using the vibration actuator 42 at the inspection location. The processing system 36, for example, may signal the vibration actuator 42 to vibrate (e.g., via a control signal or provision of an electric voltage), and the vibration of the vibration actuator 42 may be transmitted into the powerplant component 22 through the preloaded contact between the scope head 40 / the vibration actuator 42 and the component surface 54. The vibrations may be induced to sweep across a range of frequencies during the step 708; e.g., a five kilohertz (5 kHz) range, a ten kilohertz (10 kHz) range, a twenty kilohertz (20 kHz) range, one hundred kilohertz (100 kHz), or any other suitable range which will facilitate mapping of a response signature as described below. The vibrations may thereby be induced at multiple different frequencies spanning the frequency range.

In step 710, a vibratory response is measured in the powerplant component 22 using the vibration sensor 44 at the inspection location. This vibratory response is induced by the vibrations transmitted into the powerplant component 22 by the vibration actuator 42. The vibration sensor 44 then generates the sensor data indicative of the measured vibratory response, and provides the sensor data to the processing system 36.

In step 712, the sensor data is processed to determine whether or not the powerplant component 22 includes any internal defects 100 at and/or around the respective inspection location. Herein, the term "defect" may describe a physical anomaly present within a component which may negatively affect a useful life of that component and/or performance of that component. Examples of the internal defect(s) 100 include, but are not limited to, cracks, voids, corrosion, density variations, areas of poor solidification (e.g., sintering) and/or the like.

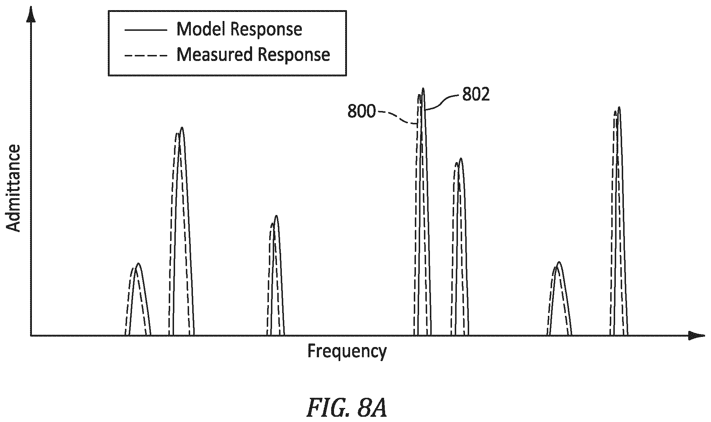

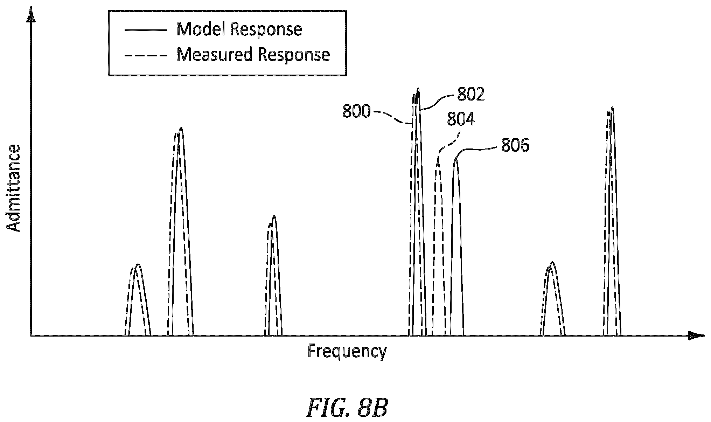

During the step 712, the processing system 36 may analyze the measured vibratory response to determine resonant frequencies and/or other structural mode parameters for the powerplant component 22. Referring to FIG. 8A, where these resonant frequencies (or other structural mode parameters) match (or are within tolerance of) corresponding expected resonant frequencies (or other structural mode parameters) for a model component (e.g., a computer modeled component, a previously inspected component, etc.) without any internal defects, the processing system 36 may determine the powerplant component 22 does not include, or there is a low probability that the powerplant component 22 includes, any internal defects. For example, a measured resonance signature 800 of the measured resonant frequencies in FIG. 8A is the same as, or is within tolerance of, a model resonance signature 802 of expected resonant frequencies for the model component without any internal defects. Note, the matching model and measured responses are shown in FIGS. 8A and 8B slightly laterally offset for clarity of illustration. By contrast referring to FIG. 8B, where one or more of the resonant frequencies and/or other structural mode parameters do not match (or are outside tolerance of) the corresponding expected resonant frequencies and/or other structural mode parameters for the model component without any internal defects, the processing system 36 may determine the powerplant component 22 does include, or there is a high probability that the powerplant component 22 includes, one or more internal defects 100. For example, the resonance signature 800 of the measured resonant frequencies in FIG. 8B includes an outlier resonant frequency 804 which is different than (e.g., does not align with) and is outside of tolerance of a corresponding resonant frequency 806 for the resonance signature 802 of the expected resonant frequencies for the model component without any internal defects. In the foregoing example, the powerplant component 22 and the model component have a common (e.g., the same) configuration and, thus, may share a common manufacturer component identification such as the same part number, the same assembly number, etc. Using this methodology, the inspection method 700 and the inspection system 20 may non-destructively identify presence of internal defect(s) 100 within the powerplant component 22 while that powerplant component 22 remains installed with the aircraft powerplant 24 and/or the aircraft powerplant 24 remains installed onboard the aircraft.

When the step 712 identifies presence of no internal defects in material of the powerplant component 22, information indicative of such may be presented on the display 34. This information may simply identify the presence of no internal defects. The information may also or alternatively indicate the inspected powerplant component 22 meets / is within a component specification (e.g., a design specification) for that powerplant component 22. The aircraft powerplant 24 may then be identified as being ready for continued operation assuming, for example, no other regular scheduled maintenance tasks and/or inspections need to be performed. Similarly, when the step 712 identifies the presence of internal defect(s) 100, information indicative of such may be presented on the display 34. This information may simply identify the presence of internal defects 100. The information may also or alternatively indicate the inspected powerplant component 22 does not meet / is outside of the component specification for that powerplant component 22. Inspection personnel may then take appropriate next steps to further inspect the powerplant component 22 and/or initiate a process for swapping out the aircraft powerplant 24, repairing the powerplant component 22 or replacing the powerplant component 22. While the inspection method 700 is described above identifying whether or not the inspected powerplant component 22 includes any internal defects 100, this inspection method 700 may also (or alternatively) be extended to determine one or more other physical characteristics about the inspected powerplant component 22.

After performing the step 710 or 712, the inspection scope 28 and the guide tube 56 may be removed from the interior 26 of the aircraft powerplant 24. The steps 706, 704 and 702, for example, may be performed in reverse. Alternatively, the inspection scope member(s) 40, 42, 44 may be (e.g., slightly) retracted from the powerplant component 22 and its component surface 54. Thus, when the powerplant component 22 is rotatable (e.g., where the powerplant component 22 is the rotor disk), the powerplant component 22 may be rotated about its rotational axis to facilitate repeating the foregoing inspection method 700 at another inspection location.

In some embodiments, the vibrations induced in the powerplant component 22 during the step 708 may have a frequency equal to or greater than thirty kilohertz (30 kHz); e.g., equal to or greater than forty kilohertz (40 kHz) or fifty kilohertz (50 kHz) up to about two hundred kilohertz (200kHz) or two hundred and fifty kilohertz (250kHz). This frequency may be a lower bound, an upper bound or an intermediate frequency within the range of frequencies swept during the vibration inducement step 708. By vibrating the powerplant component 22 at such a relatively high frequency, the inspection method 700 and/or the inspection system 20 may detect one or more internal defects 100 with a dimension (e.g., a width, a length, etc.) equal to or less than one hundred mils (0.10 inches) or one hundred and fifty miles (0.15 inches). More particularly, the inspection method 700 and/or the inspection system 20 may detect one or more internal defects 100 with a relatively small dimension equal to or less than fifty mils (0.05 inches); e.g., equal to or less than forty mils (0.04 inches). Here, the powerplant component 22 is constructed from a metal. It is contemplated, however, the vibrations may alternatively be induced at a frequency below thirty kilohertz (30 kHz) when detecting larger internal defect(s) 100 within the powerplant component 22 and/or when inspecting a powerplant component with another material construction. Moreover, the vibrations may still alternatively be induced at a frequency above two hundred and fifty kilohertz (250kHz) when detecting even smaller internal defect(s) 100 within the powerplant component 22 and/or when inspecting a powerplant component with still another material construction.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An inspection method, comprising:
inserting a distal end (62) of a guide tube (56) into an interior (26) of a powerplant (24), the powerplant (24) comprising a component (22) within the interior (26) of the powerplant (24);
bending a flexible section (70) of the guide tube (56) within the interior (26) of the powerplant (24);
passing an inspection scope (28) longitudinally through a bore of the guide tube (56) and abutting a head (40) of the inspection scope (28) against a surface (54) of the component (22), the head (40) of the inspection scope (28) comprising an actuator (42), and the distal end (62) of the guide tube (56) spaced from the surface (54) of the component (22);
inducing vibrations in the component (22) using the actuator (42); and
measuring a vibratory response in the component (22) excited by the vibrations using a sensor (44) to provide sensor data.

2. The inspection method of claim 1, wherein:
the flexible section (70) of the guide tube (56) is bent within the interior (26) of the powerplant (24) such that the distal end (62) of the guide tube (56) faces an inspection location on the surface (54) of the component (22) and the head (40) of the inspection scope (28) is abutted against the surface (54) of the component (22) at the inspection location; and/or
the guide tube (56) extends longitudinally along a centerline (58) to the distal end (62) of the guide tube (56), and the centerline (58) along the flexible section (70) of the guide tube (56) is straight during the inserting.

3. The inspection method of claim 1 or 2, wherein
the guide tube (56) extends longitudinally along a centerline (58) to the distal end (62) of the guide tube (56), and the guide tube (56) includes a first rigid section (68), a second rigid section (69) and the flexible section (70) of the guide tube (56);
the flexible section (70) of the guide tube (56) is connected longitudinally along the centerline (58) between the first rigid section (68) and the second rigid section (69); and
the centerline (58) along the first rigid section (68) is angularly offset from the centerline (58) along the second rigid section (69) by an offset angle (72) following the bending, optionally wherein the centerline (58) along the first rigid section (68) is parallel with the centerline (58) along the second rigid section (69) during the inserting.

4. The inspection method of claim 3, wherein the offset angle (72) is an obtuse angle that is less than one-hundred and eighty degrees.

5. The inspection method of claim 3, wherein:
the offset angle (72) is a right angle; or
the offset angle (72) is an acute angle.

6. The inspection method of any of claims 3 to 7, wherein a monolithic body comprises the first rigid section (68), the second rigid section (69) and the flexible section (70) of the guide tube (56).

7. The inspection method of any of claims 3 to 8, wherein
a first guide (78) is connected to the first rigid section (68);
a first control cable (76) extends through the first guide (78) and is connected to the second rigid section (69); and
the bending comprises pulling the first control cable (76) to decrease a length of a section of the first control cable (76) that extends between the first rigid section (68) and the second rigid section (69).

8. The inspection method of claim 7, further comprising:
unbending the flexible section (70) of the guide tube (56) within the interior (26) of the powerplant (24) following the measuring;
wherein a second guide (84) is connected to the first rigid section (68);
wherein a second control cable (82) extends through the second guide (84) and is connected to the second rigid section (69), and the first control cable (76) and the second control cable (82) are arranged to opposing sides of the guide tube (56); and
the unbending comprises pulling the second control cable (82) to decrease a length of a section of the second control cable (82) that extends between the first rigid section (68) and the second rigid section (69).

9. The inspection method of any preceding claim, wherein
the guide tube (56) comprises a length of tubing; and
the flexible section (70) of the guide tube (56) comprises a section of the length of tubing with one or more relief cuts (74).

10. The inspection method of any preceding claim, further comprising:
removing the inspection scope (28) from the guide tube (56) following the measuring; and
straightening the flexible section (70) of the guide tube (56) within the interior (26) of the powerplant (24) following the removing.

11. The inspection method of any preceding claim, wherein:
the head (40) of the inspection scope (28) further comprises the sensor (44); and/or
the method further comprises detecting a defect (100) internal to the component (22) using the sensor data.

12. The inspection method of any preceding claim, wherein:
the powerplant (24) comprises a turbine engine and the component (22) is configured as a rotor disk; and/or
the powerplant (24) is installed with an aircraft during the inserting, the bending, the passing, the inducing and the measuring.

13. An inspection method, comprising:
providing a guide tube (56) and an inspection scope (28), the guide tube (56) extending longitudinally along a centerline (58) to a distal end (62) of the guide tube (56), the guide tube (56) including a first rigid section (68), a second rigid section (69) and a flexible section (70) extending longitudinally along the centerline (58) from the first rigid section (68) to the second rigid section (69), the inspection scope (28) including a scope head (40) and a scope body (38) extending longitudinally to the scope head (40), and the scope head (40) comprising an electromechanical device;
deforming the flexible section (70) to angularly offset the first rigid section (68) from the second rigid section (69) by an offset angle (72) less than one-hundred and eighty degrees; and
passing the inspection scope (28) longitudinally through a bore of the guide tube (56) with the scope head (40) arranged at or near the distal end (62) of the guide tube (56).

14. A system (20) for use in inspecting a powerplant component (22), the system (20) comprising:
a guide tube (56) extending longitudinally along a centerline (58) to a distal end (62) of the guide tube (56), the guide tube (56) including a first rigid section (68), a second rigid section (69) and a flexible section (70) extending longitudinally along the centerline (58) between the first rigid section (68) and the second rigid section (69), and the flexible section (70) comprising a plurality of relief cuts (74) in a sidewall (64) of the guide tube (56) arranged longitudinally along the centerline (58); and
a guide tube controller (57) operatively coupled to the guide tube (56), the guide tube controller (57) configured to bend the guide tube (56) at the flexible section (70) and angularly offset the first rigid section (68) from the second rigid section (69) by an offset angle (72) less than one-hundred and eighty degrees.

15. The system (20) of claim 14, further comprising:
an inspection scope (28) including a scope body (38) and a scope head (40) connected to the scope body (38), the inspection scope (28) projecting longitudinally through a bore of the guide tube (56) to a distal end (62) of the scope head (40), the distal end (62) of the scope head (40) configured to abut against a surface (54) of the powerplant component (22) with the distal end (62) of the guide tube (56) spaced from the surface (54) of the powerplant component (22), the scope head (40) comprising an actuator (42) and a sensor (44), the actuator (42) configured to induce vibrations in the powerplant component (22), and the sensor (44) configured to measure a vibratory response in the powerplant component (22) excited by the vibrations to provide sensor data; and
a processing device (98) configured to process the sensor data to determine a characteristic of the powerplant component (22) based on the sensor data.
